# EUROPEAN PATENT SPECIFICATION

(11) **EP 2 846 589 B1**
(45) Date of publication and mention of the grant of the patent: **07.07.2021**
(21) Application number: 12876806.6
(22) Date of filing: 15.05.2012
(51) Int. Cl.: H04W 52/02

(54) **DISCONTINUOUS RECEPTION CONFIGURATION METHOD OF USER EQUIPMENT, BASE STATION AND SYSTEM**
KONFIGURATIONSVERFAHREN FÜR UNTERBROCHENEN EMPFANG EINER BENUTZERVORRICHTUNG, BASISSTATION UND SYSTEM
PROCÉDÉ DE CONFIGURATION DE RÉCEPTION DISCONTINUE D'UN ÉQUIPEMENT UTILISATEUR, STATION DE BASE ET SYSTÈME

(43) Date of publication of application: 11.03.2015
(73) Proprietor: Huawei Technologies Co., Ltd., Longgang District Shenzhen, Guangdong 518129 (CN)
(72) Inventor: QUAN, Wei, Shenzhen Guangdong 518129 (CN); CHEN, Yuhua, Shenzhen Guangdong 518129 (CN); ZHANG, Jian, Shenzhen Guangdong 518129 (CN)
(74) Representative: Thun, Clemens
(86) International application number: PCT/CN2012/075537
(87) International publication number: WO 2013/170448

(56) References cited:
- EP-A1- 2 157 830
- CN-A- 101 730 205
- CN-A- 101 931 870
- CN-A- 102 014 441
- CN-A- 102 014 441
- US-A1- 2008 267 105
- US-A1- 2009 175 186
- 3GPP: "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP DRAFT; 23401-B10_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 14 March 2012 (2012-03-14), XP050625446,
- "3rd Generation Partnership Project; Technical Specification Group Radio Access Network; Evolved Universal Terrestrial Radio Access Network (E-UTRAN); S1 Application Protocol (S1AP) (Release 10)", 3GPP STANDARD; 3GPP TS 36.413, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. V10.5.0, 9 March 2012 (2012-03-09), pages 1-255, XP050555313,

## Description

### TECHNICAL FIELD

The present invention belongs to the field of communications, and in particular, relates to a discontinuous reception configuration technology for a user equipment.

### BACKGROUND

Nowadays, mobile intelligent terminals are more and more popularized, and intelligent applications are also increasingly diversified; service features of various applications differ from each other significantly, and terminal power consumption has always been an import factor affecting user experience of a user equipment (User Equipment, UE). In another aspect, at present, various services of a UE, and even an operating system of a UE, generate background data packets; these background data packets are characterized by being separated from each other, and an interval between two packets is larger than that of a traditional data service, causing a potential problem of frequent exchange of air interface signaling, thereby affecting system performance.

To reduce power consumption of a terminal, the prior art provides a method for configuring discontinuous reception (Discontinuous reception, DRX) of a UE; with the DRX, a terminal is configured to monitor a control channel and data within a period, and sleep in another period without monitoring the control channel or the data, thereby achieving an objective of reducing terminal power consumption.

For example, US 2008/0267105 A1 refers to a method and apparatus for active mode discontinuous reception (DRX) synchronization and resynchronization operation. A first entity sends a DRX indicator to a second entity. The first and second entities synchronize and resynchronize DRX operation based on the DRX indicator.

Further, CN 102014441 A refers to a DRX (Discontinuous Reception) parameter configuration method. The method comprises the following steps of: initiating a service by UE (User Equipment), acquiring a characteristic parameter of the service initiated by the UE, and establishing the mapping between the service characteristic parameter and the DRX parameter configuration by an evolution base station; and configuring the DRX parameter configuration mapped by the service characteristics to the UE through an RRC (Radio Resource Control) connection reconfiguration process by the evolution base station and scheduling DRX by configuring the internal configuration process to an MAC (Media Access Control) layer.

Further, EP 2 157 830 A1 refers to a method for dynamically indicating a User Equipment (UE) to change a Discontinuous Reception (DRX) status. The method includes: determining, by an eNB, a preferred DRX status for the UE according to a pre-defined condition, and sending to the UE Measurement Configuration (MC) information containing information for indicating the preferred DRX status when determining that the DRX status of the UE needs to be changed; measuring a channel by the UE in response to the MC information received, and changing the DRX status of the UE according to the preferred DRX status indicated by the information after sending a Measurement Report (MR) to the eNB.

In addition, US 2009/0175186 A1 refers to a method for setting an active period starting point for a User Equipment (UE) in a Discontinuous Reception (DRX) mode, comprising steps of: a base station calculating and storing a position of the active period starting point for the UE based on predetermined parameters, so as to transmit data to the UE in a corresponding active period; the UE receiving Radio Resource Control (RRC) configuration information from the base station, and detecting whether the DRX mode is configured in it or not; the UE calculating its active period starting point based on predetermined DRX parameters in the received RRC configuration information; and the UE starting DRX based on the calculated active period starting point.

During implementation of the technical solution of the prior art, it is found that the prior art has the following technical problem:

In the technical solution of the prior art, a DRX parameter is configured for a user equipment (User Equipment, UE) merely according to a quality of service (Quality of Service, QoS) requirement which is of a service and is obtained from a core network side, and only the QoS requirement of this service is taken into consideration while features of different UEs are not considered; therefore, power saving performance and user experience may be affected.

### SUMMARY

An objective of embodiments of the present invention is to provide a method for configuring discontinuous reception of a user equipment, aiming at solving a problem in the prior art that power saving performance and user experience are affected because UE features are not taken into consideration.

This problem is solved by the subject matter of the independent claims. Further implemenation forms are provided in the dependnet claims. In the embodiments of the present invention, according to the technical solutions provided by the present invention, the message carrying the DRX feature information of the UE is received, and the DRX parameter of the UE is configured according to the DRX feature information of the UE; the DRX parameter is directly configured according to the DRX feature information of the UE; therefore, in the technical solutions provided by the embodiments, a feature of each UE is fully considered, thereby having advantages in power saving performance and user experience.

### BRIEF DESCRIPTION OF DRAWINGS

FIG. 1 is a flow chart of a method for configuring discontinuous reception of a user equipment according to a specific implementation manner of the present invention;
FIG. 2 is a structural diagram of an evolved base station according to a specific implementation manner of the present invention;
FIG. 3 is a structural diagram of a discontinuous reception configuration of a user equipment according to a specific implementation manner of the present invention;
FIG. 4 is a structural diagram of a user equipment according to a specific implementation manner of the present invention;
FIG. 5 is a flow chart of a method for configuring discontinuous reception of a user equipment according to an embodiment of the present invention; and
FIG. 6 is a flow chart of a method for configuring discontinuous reception of a user equipment according to another embodiment of the present invention.

### DESCRIPTION OF EMBODIMENTS

To make the objectives, technical solutions, and advantages of the present invention clearer, the present invention is further described in detail in the following with reference to the accompanying drawings and the embodiments. It should be understood that the specific embodiments described herein are only used to explain the present invention but are not intended to limit the present invention.

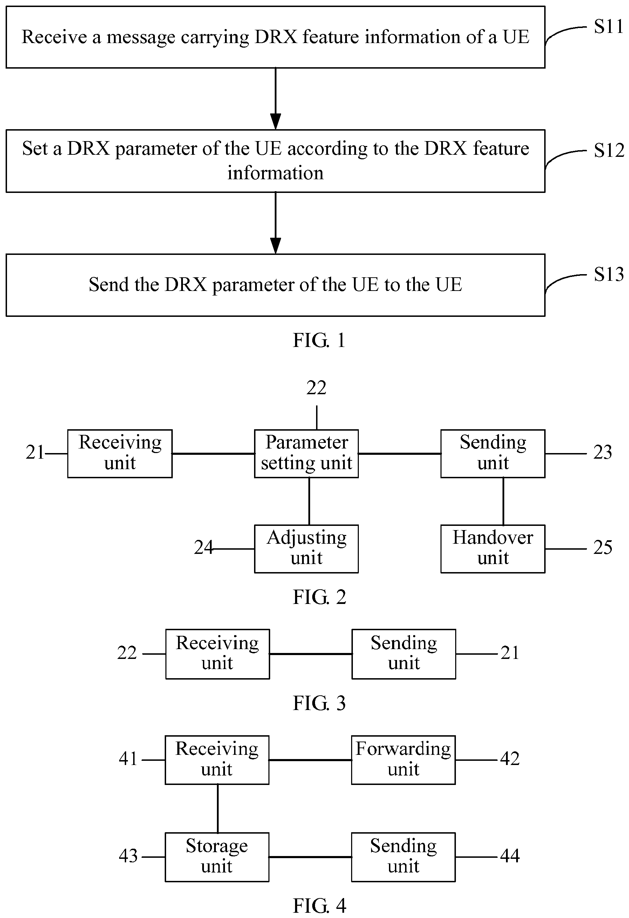

A specific implementation manner of the present invention provides a method for configuring discontinuous reception of a user equipment, where the method is executed by an evolved base station (evolved NodeB, eNB), and as shown in FIG. 1, the method includes the following steps:
S11: Receive a message carrying DRX feature information of a UE.
S12: Set a DRX parameter of the UE according to the DRX feature information of the UE.
S13: Send the DRX parameter of the UE to the UE.

It should be noted that, the DRX feature information of the UE may specifically include: a user-setting-specific discontinuous reception UE Specific DRX parameter and/or service information corresponding to the UE; the service information may specifically include service information such as a UE service type, a service packet arrival interval, and a service data packet size, may further include information of a bearer where a service is located, information of a stream where a service is located, and may further include a service number.

When the DRX feature information of the UE is the UE Specific DRX parameter, a method for implementing S12 may specifically be:
setting the DRX parameter of the UE to the UE Specific DRX parameter.

When the UE Specific DRX parameter includes a connected-state UE Specific DRX parameter, a method for implementing S12 may specifically be:
setting a connected-state DRX parameter of the UE to the connected-state UE Specific DRX parameter.

Optionally, after S12, the method may further include:
adjusting the DRX parameter of the UE according to a load condition or service information of a current cell.

Optionally, after S13, the method may further include:
when the UE is handed over, transmitting the DRX parameter of the UE to a handover target base station through a mobility management entity (Mobility Management Entity, MME).

When the DRX feature information of the UE is the service information corresponding to the UE, a method for implementing S12 may specifically include:
adjusting the DRX parameter of the UE according to the service information corresponding to the UE; for example, a DRX period is adjusted according to service packet arrival interval information; and certainly, there may also be other adjusting manners.

Optionally, the message carrying the DRX feature information of the user equipment UE may specifically include:
an initial context setup request Initial Context Setup Request message carrying the DRX feature information of the user equipment UE, an attach request Attach request carrying the DRX feature information of the user equipment UE, an evolved universal terrestrial radio access network (Universal Terrestrial Radio Access Network, UTRAN) radio access bearer setup request eRAB setup request carrying the DRX feature information of the user equipment UE, or an RRC message carrying indication information.

In the method provided by the present invention, the message carrying the DRX feature information of the UE is received, and the DRX parameter of the UE is configured according to the DRX feature information of the UE; the DRX parameter is directly configured according to the DRX feature information of the UE; therefore, in the technical solution provided by the embodiment, a feature of each UE is fully considered, thereby having advantages in power saving performance and user experience.

A specific implementation manner of the present invention further provides an evolved base station, where as shown in FIG. 2, the evolved base station includes:
a receiving unit 21, configured to receive a message carrying DRX feature information of a user equipment UE;
a parameter setting unit 22, configured to set a DRX parameter of the UE according to the DRX feature information; and
a sending unit 23, configured to send the DRX parameter of the UE to the UE.

Optionally, the DRX feature information of the UE specifically includes: a UE Specific DRX parameter and/or service information corresponding to the UE;
where the service information may specifically include: a UE service type, a UE service number, a service packet arrival interval, or a service data packet size; and
the UE Specific DRX parameter may include: a UE Specific DRX parameter for paging and/or a connected-state UE Specific DRX parameter.

Optionally, when the DRX feature information of the UE is the UE Specific DRX parameter, the setting unit 22 is specifically configured to set the DRX parameter of the UE to the UE Specific DRX parameter.

Optionally, when the UE Specific DRX parameter includes the connected-state UE Specific DRX parameter, the setting unit 22 may be specifically configured to: set a connected-state DRX parameter of the UE to the connected-state UE Specific DRX parameter.

Optionally, when the DRX feature information of the UE is the service information corresponding to the UE, the setting unit 22 may be specifically configured to adjust the DRX parameter of the UE according to the service information corresponding to the UE.

Optionally, the evolved base station may further include:
an adjusting unit 24, configured to adjust the DRX parameter of the UE according to a load condition or service information of a current cell.

Optionally, the evolved base station may further include:
a handover unit 25, configured to transmit the DRX parameter of the UE to a handover target base station through a mobility management entity when the UE is handed over.

Optionally, the message carrying the DRX feature information of the user equipment UE may specifically include:
an initial context setup request Initial Context Setup Request message carrying the DRX feature information of the user equipment UE, an attach request Attach request carrying the DRX feature information of the user equipment UE, an evolved UTRAN radio access bearer setup request eRAB setup request carrying the DRX feature information of the user equipment UE, or an RRC message carrying indication information.

The evolved base station provided by the present invention receives the message carrying the DRX feature information of the UE, and configures the DRX parameter of the UE according to the DRX feature information of the UE; the DRX parameter is directly configured according to the DRX feature information of the UE; therefore, in the technical solution provided by the embodiment, a feature of each UE is fully considered, thereby having advantages in power saving performance and user experience.

A specific implementation manner of the present invention further provides a user equipment, where as shown in FIG. 3, the user equipment may include:
a sending unit 31, configured to send a message carrying DRX feature information of a user equipment UE; and
a receiving unit 32, configured to receive a DRX parameter of the UE sent by an evolved base station after the evolved base station completes setting the DRX parameter of the UE according to the message carrying the DRX feature information of the user equipment UE.

Optionally, the message carrying the DRX feature information of the user equipment UE specifically includes:
an attach request Attach request carrying the DRX feature information of the user equipment UE or an RRC message carrying indication information.

Optionally, the sending unit 31 is specifically configured to send a message carrying connected-state DRX feature information of the UE. When having the connected-state DRX feature information, the eNB may set a connected-state DRX parameter of the UE according to the connected-state DRX feature information.

A specific implementation manner of the present invention further provides a mobility management entity, where as shown in FIG. 4, the mobility management entity includes:
a receiving unit 41, configured to receive a message which carries DRX feature information of a user equipment UE and is sent by the user equipment UE; and
a forwarding unit 42, configured to forward the DRX feature information of the UE to an evolved base station so that the evolved base station configures a DRX parameter of the UE according to the DRX feature information of the UE.

Optionally, the mobility management entity further includes:
a storage unit 43, configured to store the DRX parameter of the UE sent by the evolved base station; and
a sending unit 44, configured to send the DRX parameter of the UE to a handover target base station when the UE is handed over.

### Embodiments

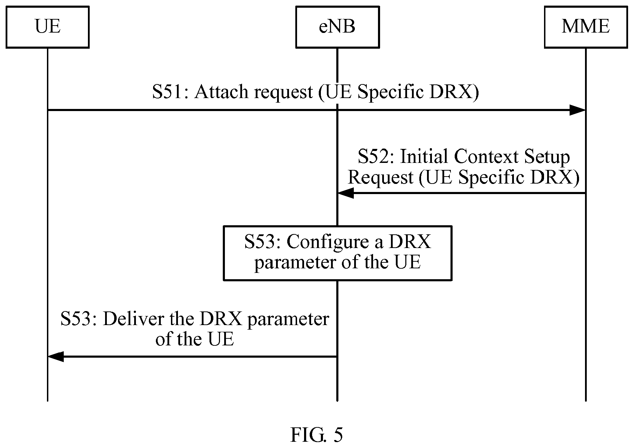

The present invention provides an embodiment, and this embodiment provides a method for configuring discontinuous reception of a user equipment; the method provided by this embodiment is completed among a UE, an eNB, and an MME; and as shown in FIG. 5, the method includes the following steps:

S51: In an attach (Attach) process, a UE carries a UE Specific DRX parameter in an attach request (Attach request) and reports the attach request to an MME.

The UE Specific DRX parameter includes at least a DRX period related parameter, where the related parameter includes at least a DRX period; in addition, the related parameter may also include a parameter such as an on duration (On Duration) parameter and an inactivity timer (Inactivity Timer) parameter.

S52: When the UE is in a service setup process, the MME sends the UE Specific DRX parameter to an eNB through an Initial Context Setup Request message.

Certainly, it should be noted that the Initial Context Setup Request message may be set to an eRAB setup request message, and certainly, a new message may also be customized to carry the UE Specific DRX parameter.

S53: The eNB configures a DRX parameter of the UE according to the received UE Specific DRX parameter, and delivers the configured DRX parameter to the UE.

A method for implementing S53 may be: directly setting a value of the DRX parameter of the UE by using a value in the UE Specific DRX parameter, for example, setting a DRX period value of the DRX parameter of the UE by using a DRX period in the UE Specific DRX parameter; where certainly, there may also be other manners, for example, when configuring the DRX parameter of the UE, the eNB may also refer to a load condition or service information of an equivalent cell; for example, when a load is relatively heavy, the eNB decreases the value in the DRX parameter of the UE when configuring the DRX parameter of the UE; by taking the DRX period in the DRX parameter as an example, when the load is relatively heavy, the eNB may shorten the DRX period, and various vendors may also appropriately adjust the DRX period according to conditions of their respective equipments; this embodiment does not limit a specific display manner of the adjustment.

Optionally, the DRX parameter delivered to the UE is generally carried in an RRC Connection Reconfiguration (radio resource control connection reconfiguration) message to the UE, and certainly, a new RRC message may also be customized for configuration according to an actual situation; the present invention does not limit a specific delivered message, which is not described in detail herein.

Optionally, in S53, when configuring the DRX parameter of the UE according to the received UE Specific DRX parameter, the eNB may also refer to DRX indication information reported by the UE, where the DRX indication information may specifically include an active (Active) state/inactive (Inactive) state, and may also be specific battery state information, screen state information, information indicating whether there is a service, information of a service other than a background service (for example, there is only the background service currently), or information of a service currently being set up and running. This embodiment does not limit information carried in the indication information, as long as the carried information is information that may influence DRX parameter setting.

In the method provided by the embodiment, the DRX parameter of the UE is configured by using the UE Specific DRX parameter reported by the UE. The DRX parameter is directly configured by using the UE Specific DRX parameter reported by the UE; therefore, in the technical solution provided by the embodiment, a feature of each UE is fully considered, thereby having advantages of improving UE power saving performance and user experience.

A specific implementation manner of the present invention differs in that, a UE Specific DRX parameter for paging and a connected-state UE Specific DRX parameter are used to replace the UE Specific DRX parameter in the first embodiment. It should be additionally noted herein that, the UE Specific DRX parameter for paging and the connected-state UE Specific DRX parameter have different functions, and specifically, the UE Specific DRX parameter for paging (which is defined as a parameter 1 herein for convenience of description) is used for configuring a paging DRX parameter, and the connected-state UE Specific DRX parameter (which is defined as a parameter 2 herein) is used for configuring a connected-state DRX parameter; in this case, the UE and the eNB have two DRX parameters, where values of the two DRX parameters may be different, and the two DRX parameters are used in a paging state and a connected state respectively; the UE Specific DRX parameter in the first embodiment may be construed as the parameter 1 and parameter 2 being set to a same parameter value.

A specific implementation manner of the present invention differs in that, the message which carries the UE Specific DRX parameter and is reported by the UE to the MME in this embodiment is different; the message carrying the UE Specific DRX parameter in this embodiment may specifically be reported in a non-access stratum (Non-Access Stratum, NAS) process and message, and certainly, may also include, but is not limited to, the following messages: a TRACKING AREA UPDATE REQUEST (tracking area update request) message in a TAU process, a Service Request (service request) message in a service setup process, a Bearer resource modification request (bearer resource modification request) message, or other processes and messages.

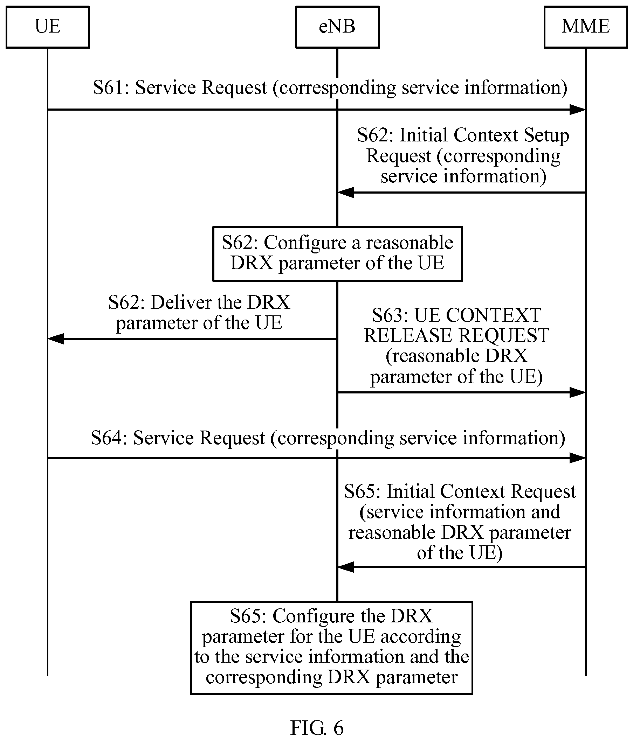

A specific implementation manner of the present invention provides yet another embodiment; where this embodiment provides a method for configuring discontinuous reception of a user equipment, and as shown in FIG. 6, the method includes the following steps:
S61: When a service is set up, a UE notifies, through a Service Request message, an MME of current service information corresponding to the UE, where the service information may be information such as a service type, a service packet arrival interval, and a service data packet size, may also include information of a bearer where a service is located and information of a stream where the service is located, and may also be only a service number.

It should be additionally noted herein that service information corresponding to UEs may be different because the UEs may have different service requirements even on a same service, and therefore, the UEs may correspond to different service information.

In addition, optionally, the Service Request message may also be replaced with a Bearer resource modification request message, or a new message may be created to notify the MME of the current service information corresponding to the UE.

S62: After the service is set up, the MME transmits information such as service QoS of each UE to an eNB, and the eNB configures a reasonable DRX parameter for the UE according to information such as a service QoS requirement, a current load, and a service feature of each UE.

S63: When the service is released or the UE releases an RRC connection, the eNB reports the DRX parameter configured for the UE to the MME, and the MME stores the DRX parameter.

A method for implementing S63 may specifically include that the MME binds or maps the parameter to service information (which is previously reported by the UE or stored by the MME). Reporting of the eNB may involve a message such as UE CONTEXT RELEASE REQUEST, UE CONTEXT RELEASE COMPLETE, ERAB RELEASE RESPONSE, or ERAB RELEASE INDICATION; optionally, the parameter may also be carried in another process or message from the eNB to the MME, which is not described in detail herein.

S64: When a service is set up, the UE notifies, through a Service Request message, the MME of current service information corresponding to the UE, where the service information may be information such as a service type of each UE, a service packet arrival interval of each UE, and a service data packet size of each UE, and may also be only a service number of each UE.

S65: After the service is set up, the MME may carry the service information and a corresponding DRX parameter in an Initial Context Request (initial context) message, an ERAB Setup Request message, or another S1 interface message sent to the eNB, and the eNB configures a DRX parameter for the UE according to the service information and the corresponding DRX parameter.

Optionally, after S64, the method may further include: After setting the DRX parameter of the UE, the eNB may notify the MME to update the DRX parameter, where a message carrying the updated DRX parameter may specifically be a message such as UE CONTEXT RELEASE REQUEST (UE context release request), UE CONTEXT RELEASE COMPLETE (UE context release complete), ERAB RELEASE RESPONSE (E-UTRAN radio access bearer release response), or ERAB RELEASE INDICATION (E-UTRAN radio access bearer release indication), and certainly, the service information and the corresponding DRX parameter may also be transmitted through new information.

A specific implementation manner of the present invention further provides yet another embodiment, where this embodiment differs from the foregoing embodiments (including the first embodiment, another embodiment, and still another embodiment) in that, after a configuration of a DRX parameter for a UE is performed, the method may further include: When the UE is handed over, a source base station sends the UE Specific DRX parameter and possible service information to a target base station, where a transmission manner varies slightly according to different handover types, for example, when the UE performs X2 interface handover, the message may specifically include a HANDOVER REQUEST (handover request) message sent by the source base station to the target base station through an X2 interface or another X2 interface message; when the UE performs S1 interface handover, messages transmitting the parameter are a HANDOVER REQUIRED (handover required) message sent by the source base station to an MME through an S1 interface, and a HANDOVER REQUEST (handover request) message further sent by the MME to the target base station through the S1 interface; and if cross-MME handover is performed, the message may also be transmitted between MMEs, which is not described in detail herein.

The modules or units involved in the foregoing unit and system embodiments are divided merely according to function logic; however, the present invention is not limited to the foregoing dividing manner, as long as corresponding functions can be implemented; in addition, specific names of the functional modules are only used for distinguishing the modules from each other, and are not intended to limit protection scope of the present invention.

Persons skilled in the art may understand that, all or a part of the steps in the technical solutions provided by the embodiments of the present invention may be completed through a program instructing relevant hardware, for example, through running the program on a computer. The program may be stored in a readable storage medium, for example, a random access memory, a magnetic disk, or a compact disk.

The foregoing is merely exemplary embodiments of the present invention, but is not intended to limit the present invention, which is defined by the appended claims.

## Claims

1. A method carried out by an evolved base station for configuring discontinuous reception of a user equipment, UE, the method comprising:
• receiving a message carrying discontinuous reception, DRX, feature information of the UE (S11);
• setting a DRX parameter of the UE according to a service data packet size included in the DRX feature information of the UE (S12);
• sending the DRX parameter of the UE to the UE (S13).

2. The method according to claim 1, wherein after the sending the DRX parameter of the UE to the UE, the method further comprises:
when the UE is handed over, transmitting the DRX parameter of the UE to a handover target base station through a mobility management entity.

3. An evolved base station configured to perform any of the methods according to claims 1 - 2.

## Patentansprüche

1. Verfahren, das durch eine Evolved-Basisstation zum Konfigurieren eines diskontinuierlichen Empfangs einer Benutzereinrichtung (*user equipment-* UE) ausgeführt wird, wobei das Verfahren umfasst:
• Empfangen einer Nachricht, die Merkmalsinformationen des diskontinuierlichen Empfangs (*discontinuous reception* - DRX) der UE trägt (S11);
• Einstellen eines DRX-Parameters der UE gemäß einer Dienstdatenpaketgröße, die in den DRX-Merkmalsinformationen der UE beinhaltet ist (S12);
• Senden des DRX-Parameters der UE an die UE (S13).

2. Verfahren nach Anspruch 1, wobei das Verfahren nach dem Senden des DRX-Parameters der UE an die UE ferner umfasst:
wenn die UE übergeben wird, Übertragen des DRX-Parameters der UE an eine Übergabezielbasisstation durch eine Mobilitätsverwaltungsentität.

3. Evolved-Basisstation, die konfiguriert ist, um eines der Verfahren nach den Ansprüchen 1-2 durchzuführen.

## Revendications

1. Procédé mis en œuvre par une station de base évoluée destinée à configurer la réception discontinue d'un équipement d'utilisateur, UE, le procédé comprenant :
• la réception d'un message transportant des informations de caractéristique de réception discontinue, DRX, de l'UE (S11) ;
• le réglage d'un paramètre de DRX de l'UE selon une taille de paquet de données de service incluse dans les informations de caractéristique de DRX de l'UE (S12) ;
• l'envoi du paramètre de DRX de l'UE à l'UE (S13).

2. Procédé selon la revendication 1, dans lequel après l'envoi du paramètre de DRX de l'UE à l'UE, le procédé comprend en outre :
lorsque l'UE est transféré, la transmission du paramètre de DRX de l'UE à une station de base cible de transfert par l'intermédiaire d'une entité de gestion de mobilité.

3. Station de base évoluée configurée pour effectuer l'un quelconque des procédés selon les revendications 1 à 2.
